# DEMANDE DE BREVET EUROPEEN

(11) **EP 4 793 112 A1**
(43) Date de publication de la demande: **19.08.2026**
(21) Numéro de dépôt: 26158219.1
(22) Date de dépôt: 12.02.2026
(51) Int. Cl.: B60S 1/04, B60S 1/34, B62D 25/08

(54) **VÉHICULE AUTOMOBILE ET ENSEMBLE ESSUIE VITRE**

(30) Priorité: 13.02.2025 FR 2501512
(71) Demandeur: Flexis, 92100 Boulogne Billancourt (FR)
(72) Inventeur: BARREIRO, Emmanuel, 78640 VILLIERS SAINT-FREDERIC (FR); BOURDON, Ludovic, 78280 GUYANCOURT (FR); RAMOS, Alberto, 78640 VILLIERS-SAINT-FREDERIC (FR)
(74) Mandataire: Lavoix

(57) **Abrégé**

L'ensemble essuie vitre (5) comprend :
- un balai (7) prévu pour essuyer une vitre (3) du véhicule automobile ;
- un bras (9), sur lequel est monté le balai (7) ;
- un entraînement (11) configuré pour entraîner le bras (9) par rapport à la vitre (3) selon un mouvement de pivotement, l'entraînement (11) ayant un arbre (13) d'entraînement du bras (9) sur lequel est fixée une extrémité (15) du bras (9) ;
- une gouttière (19) placée sous la vitre (3) et configurée pour collecter l'eau ruisselant sur la vitre (3) ;
la gouttière (19) ayant un orifice (41) traversé par l'arbre d'entraînement (13), l'orifice (41) étant entouré par une nervure (43) à contour fermé, empêchant l'eau de pénétrer dans l'orifice (41).

## Description

La présente invention concerne en général un ensemble essuie vitre pour véhicule automobile.

Il est possible de prévoir dans un tel ensemble :
- un balai prévu pour essuyer une vitre du véhicule automobile ;
- un bras sur lequel est monté le balai ;
- un entrainement configuré pour entrainer le bras par rapport à la vitre selon un mouvement de pivotement, l'entrainement ayant un arbre d'entrainement du bras sur lequel est fixée une extrémité du bras ;
- une gouttière placée sous la vitre et configurée pour collecter l'eau ruisselant sur la vitre.

La gouttière peut présenter un orifice traversé par l'arbre d'entrainement.

Dans ce cas, l'eau ruisselant sur le pare-brise passe dans l'interstice entre l'arbre d'entrainement et le bord de l'orifice. Une boite à eau est prévue dans le compartiment moteur, sous l'orifice, pour collecter l'eau passant à travers l'orifice.

Le fait d'ajouter une boite à eau rend l'ensemble essuie vitre plus complexe et plus coûteux. Le montage de l'ensemble essuie vitre est plus long.

Dans ce contexte, l'invention vise à proposer un ensemble essuie vitre qui ne présente pas le défaut ci-dessus.

A cette fin, l'invention porte sur un ensemble essuie vitre pour véhicule automobile, l'ensemble comprenant :
- un balai prévu pour essuyer une vitre du véhicule automobile ;
- un bras, sur lequel est monté le balai;
- un entraînement configuré pour entraîner le bras par rapport à la vitre selon un mouvement de pivotement, l'entraînement ayant un arbre d'entraînement du bras (9) sur lequel est fixée une extrémité du bras;
- une gouttière placée sous la vitre et configurée pour collecter l'eau ruisselant sur la vitre ; la gouttière ayant un orifice traversé par l'arbre d'entraînement, l'orifice étant entouré par une nervure à contour fermé, empêchant l'eau de pénétrer dans l'orifice.

La nervure à contour fermé qui entoure l'orifice empêche l'eau de pénétrer dans l'orifice. **Il** n'y a donc plus d'écoulement d'eau entre l'arbre d'entrainement et le bord de l'orifice. En conséquence, il n'est plus nécessaire de prévoir une boite à eau pour collecter l'eau pénétrant par l'orifice.

L'ensemble essuie vitre est de conception plus simple, et son montage est plus rapide.

L'ensemble essuie vitre peut en outre présenter une ou plusieurs des caractéristiques ci-dessous, considérées individuellement ou selon toutes les combinaisons techniquement possibles :
- la gouttière comprend un canal transversal et un panneau incliné interposé entre le canal et la vitre de telle sorte que l'eau ruisselant sur la vitre traverse le panneau incliné avant d'être recueillie dans le canal, l'orifice étant ménagé dans le panneau incliné ;
- le canal transversal et le panneau incliné sont venue de matière, en un matériau plastique ;
- la nervure est formée par un bord dressé de l'orifice ;
- la nervure est circulaire, l'extrémité du bras comportant un bord externe cylindrique entourant la nervure ;
- l'extrémité du bras comportant un bord interne cylindrique, le bord interne cylindrique et le bord externe cylindrique délimitant entre eux une gorge dans laquelle est placée la nervure ;
- l'ensemble essuie vitre comprend :
   - un autre balai prévu pour essuyer la vitre du véhicule automobile ;
   - un autre bras, sur lequel est monté l'autre balai ;
      l'entraînement ayant un autre arbre d'entraînement de l'autre bras sur lequel est fixée une extrémité de l'autre bras,
      la gouttière ayant un autre orifice traversé par l'autre arbre d'entraînement, l'autre orifice étant entouré par une autre nervure à contour fermé, empêchant l'eau de pénétrer dans l'autre orifice ;
- l'orifice et l'autre orifice sont placés à deux extrémités transversales opposées de la gouttière .

Selon un second aspect, l'invention porte sur un véhicule automobile comprenant une vitre et un ensemble essuie vitre ayant les caractéristiques ci-dessus, prévu pour essuyer ladite vitre.

Avantageusement, la vitre est le pare-brise du véhicule automobile.

D'autres caractéristiques et avantages de l'invention ressortiront de la description détaillée qui en est donné ci-dessous, à titre indicatif et nullement limitatif, en référence aux figures annexées, parmi lesquelles :
- [Fig. 1] La figure 1 est une vue en perspective d'une partie d'un véhicule automobile, montrant notamment le pare-brise et l'ensemble essuie vitre selon l'invention ;
- [Fig. 2] La figure 2 est une représentation schématique simplifiée du pare-brise et de l'ensemble essuie vitre de la figure 1, considérés en coupe dans un plan perpendiculaire à la direction transversale ;
- [Fig. 3] La figure 3 est une représentation schématique de l'extrémité du bras de l'ensemble essuie vitre de la figure 2, considérée selon l'incidence de la flèche III de la figure 2 ; et
- [Fig. 4] La figure 4 est une vue en perspective de l'extrémité du bras monté sur l'arbre d'entrainement, un profil de la gouttière et de l'extrémité du bras étant superposé sur cette figure.

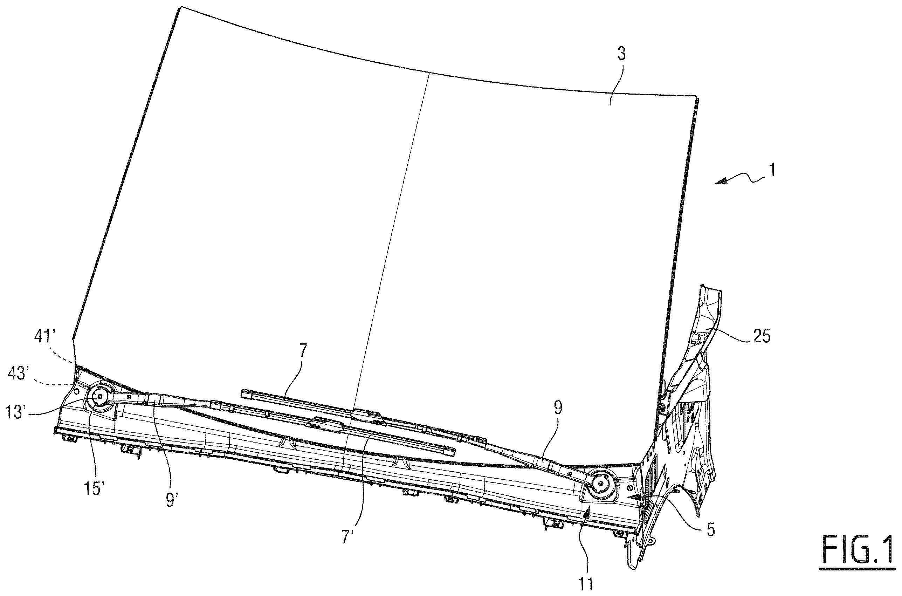

Le véhicule automobile 1 représenté partiellement sur la figure 1 comporte une vitre 3 et un ensemble essuie vitre 5, prévu pour essuyer ladite vitre 3.

La vitre est typiquement le pare-brise du véhicule automobile.

En variante, c'est la vitre arrière du véhicule ou toute autre vitre de ce véhicule.

Selon une autre variante, cette vitre fait partie d'un projecteur lumineux du véhicule.

L'ensemble essuie vitre 5 comprend :
- un balai 5, prévu pour essuyer la vitre 3 du véhicule automobile ;
- un bras 7, sur lequel est monté le balai 5 ;
- un entrainement 9, configuré pour entrainer le bras 7 par rapport à la vitre 3 selon un mouvement de pivotement.

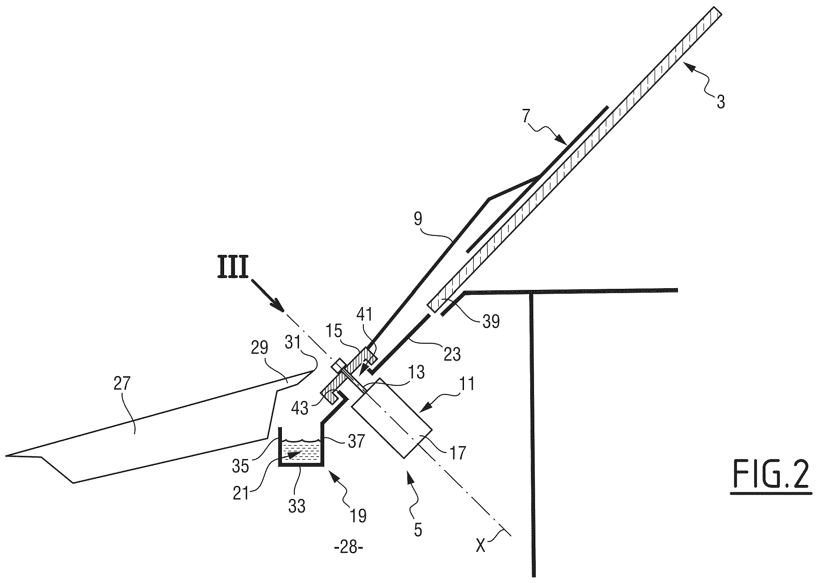

L'entrainement 11, comme visible sur la figure 2, comporte un arbre 13 d'entrainement du bras 9, sur lequel est fixée une extrémité 15 dudit bras. L'arbre d'entraînement 13 s'étend selon un axe X.

Par exemple, l'entrainement 11 comporte un moteur 17, dont l'arbre de sortie entraine en rotation l'arbre d'entrainement 13.

L'arbre de sortie par exemple est directement raccordé à l'arbre d'entraînement 13. En variante, l'entraînement 11 comporte une chaîne cinématique raccordant l'arbre de sortie à l'arbre d'entraînement 13.

Le bras 7 est typiquement entraîné selon un mouvement de rotation autour d'un axe de rotation coïncidant avec l'axe X. En variante, le bras 7 est entraîné selon un mouvement plus complexe, au cours duquel l'arbre d'entraînement 13 se déplace par rapport à la vitre 3.

Comme visible sur les figures 1 et 2, l'ensemble 5 comporte encore une gouttière 19, placée sous la vitre 3 et configurée pour collecter l'eau ruisselant sur la vitre 3.

La gouttière comprend un canal transversal 21 et panneau 23 incliné interposé entre le canal 21 et la vitre 3, de telle sorte que l'eau ruisselant sur la vitre 3 traverse le panneau 23 avant d'être recueillie dans le canal 21.

Le canal transversal 21 et le panneau incliné 23 sont venus de matière l'un avec l'autre. Ils sont en une matière plastique.

Par exemple, la gouttière est une pièce en matière plastique injectée.

Le canal 21 est ouvert vers le haut.

Le canal 21 s'étend transversalement sur toute la largeur du pare-brise 3. Il est ouvert à ses deux extrémités transversales, de telle sorte que l'eau recueillie dans le canal 21 s'écoule entre la carrosserie et la doublure du passage de roue 25, visible sur la figure 1.

Dans l'exemple représenté, le canal 21 présente, en section perpendiculairement à la direction transversale, une section en U ouverte vers le haut.

Comme visible sur la figure 2, le véhicule automobile comporte un capot avant 27.

Le capot avant 27 ferme le compartiment moteur 28.

Le capot 27 est délimité vers l'arrière du véhicule par un bord transversal arrière 29. Un interstice 31 sépare le panneau incliné 23 du bord transversal arrière 29.

Le canal 21 est placé sous le bord transversal arrière 29 du capot.

Le canal 21 comporte un fond 33, une paroi avant 35 et une paroi arrière 37.

Comme visible sur la figure 2, le panneau incliné 23 s'étend vers le haut et vers l'arrière à partir de la gouttière 21, jusqu'à un bord inférieur 39 de la vitre 3.

Plus précisément, le panneau incliné 23 s'étend à partir de la paroi arrière 37 du canal 21 jusqu'au bord inférieur 39 de la vitre 3.

Dans l'exemple représenté où la vitre 3 est le pare-brise du véhicule, la vitre 3 s'étend à partir du bord inférieur 39 vers le haut et vers l'arrière du véhicule.

Comme visible sur la figure 2, la gouttière 19 présente un orifice 41 traversé par l'arbre d'entrainement 13.

L'orifice 41 est ménagé dans le panneau incliné 23.

L'orifice 41 présente une section beaucoup plus grande que la section droite de l'arbre d'entrainement 13, pour tenir compte de la tolérance de position de cet arbre 13 dans l'orifice 41.

Avantageusement, l'orifice 41 est entouré par une nervure à contour fermé 43 empêchant l'eau de pénétrer dans l'orifice 41. En d'autres termes, l'eau ruisselant sur la vitre 3 puis s'écoulant sur le panneau incliné 23 ne peut pas pénétrer dans l'orifice 41. La nervure 43 dévie l'eau autour de l'orifice 41, cette eau s'écoulant dans le canal 21 et non dans l'orifice 41.

Avantageusement, la nervure 43 est formée par un bord dressé de l'orifice 41. En d'autres termes, le bord 43 de l'orifice 41 forme un cylindre entourant l'orifice 41.

L'orifice 41 est ménagé dans une zone plane 45 de la paroi inclinée. Le bord dressé 43 fait sailli par rapport à la zone plane 45. L'axe central du bord dressé 43 est sensiblement perpendiculaire à la zone plane 45.

Cet axe central coïncide typiquement avec l'axe X.

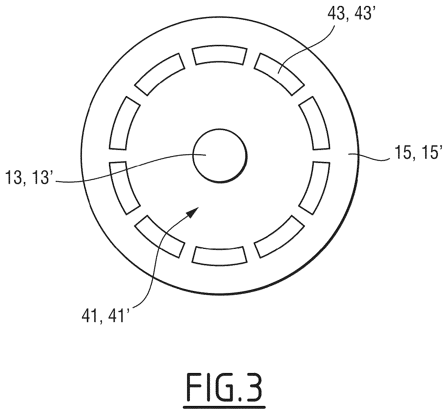

Sur la figure 3, la nervure 43 est représentée en traits interrompus car elle est vue à travers l'extrémité 15 du bras. Cette nervure 43 en pratique est continue, et ne présente pas d'interruptions à travers lesquelles l'eau pourrait s'écouler.

Comme visible sur la figure 3, la nervure 43 est typiquement circulaire.

L'extrémité du bras 15 présente une forme générale de disque.

Elle comporte un fond 47 avec une partie centrale 49 relativement plus épaisse rigidement fixée à l'arbre d'entrainement 13, et une partie périphérique annulaire 51 relativement moins épaisse, s'étendant autour de la partie centrale 49 et solidaire de celle-ci.

La surface externe du fond 47, à l'opposé de l'orifice 41, est étagée selon l'axe X. Au niveau de la partie centrale 49, la surface externe est décalée à plus grande distance de l'orifice 41 qu'au niveau de la partie annulaire 51.

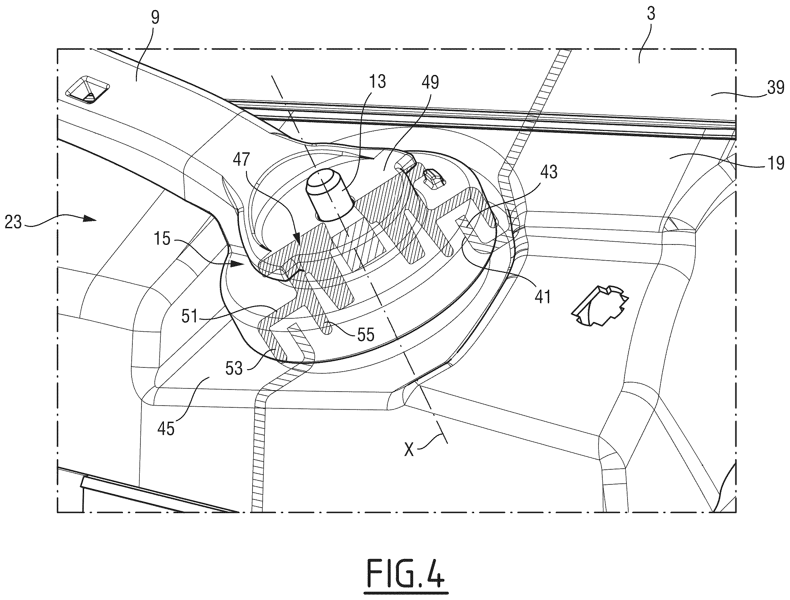

Comme visible sur la section superposée sur la figure 4, l'extrémité 15 du bras 9 comporte un bord externe cylindrique 53 entourant la nervure 43. Le bord externe cylindrique 53 est porté par le bord radialement externe du fond 47. **Il** fait saillie à partir de la partie périphérique annulaire 51 vers l'orifice 41 selon l'axe X.

L'extrémité 15 du bras comporte également un bord interne cylindrique 55, le bord interne cylindrique 55 et le bord externe cylindrique 53 définissant entre eux une gorge 57 dans laquelle est placée la nervure 43.

Le bord interne cylindrique 55 fait saillie axialement à partir du fond 47, vers l'orifice 51. Il est placé à l'intérieur de la nervure 43. **Il** s'étend sensiblement au niveau de la jonction entre la partie centrale 49 et la partie périphérique annulaire 51.

La gorge 57 est donc délimitée par la partie périphérique annulaire 51, par le bord interne cylindrique 55 et par le bord externe cylindrique 53.

La nervure 43 est engagée sans contact direct ou indirect avec le bord interne cylindrique 55 ou le bord externe cylindrique 53.

Il n'existe pas de joint d'étanchéité entre l'extrémité 15 du bras et la nervure 43 ou l'arbre d'entraînement 13.

La gorge 57 et la nervure 43 constituent donc une sorte de joint labyrinthe empêchant la pénétration d'eau à l'intérieur de l'orifice 41, même quand le débit d'eau ruisselant sur la vitre 3 est très important.

Typiquement, et comme illustré sur la figure 1, l'ensemble 5 comprend un autre balai 7' prévu pour essuyer la vitre 3 du véhicule automobile, et un autre bras 9' sur lequel est monté l'autre balai 7'.

L'entrainement 11 dans ce cas est configuré pour entrainer l'autre bras 9' par rapport à la vitre 3 selon un mouvement de pivotement.

L'entrainement 11 comporte alors un autre arbre d'entrainement 13', visible sur la figure 1, entrainant l'autre bras 9'. Une extrémité 15' de l'autre bras est fixée sur l'autre d'arbre d'entrainement 13'.

L'autre arbre d'entrainement 13' est entrainé en rotation par le moteur 7, via une chaine cinématique qui n'est pas représentée ici.

En variante, l'autre arbre d'entrainement 13' est entrainé en rotation par un autre moteur, synchronisé avec le moteur 17.

Dans l'exemple représenté sur la figure 1, l'arbre d'entrainement 13 et l'autre arbre d'entrainement 13' sont situés au niveau de deux bords transversaux opposés du pare-brise 3.

Le bras 9 et l'autre bras 9' pivotent dans des sens opposés. Quand le bras 9 pivote en sens horaire, le bras 9' pivote dans le sens antihoraire. Inversement, quand le bras 9 pivote en sens antihoraire, le bras 9' pivote en sens horaire.

La gouttière 21 présente alors un autre orifice 41' traversé par l'autre arbre d'entrainement 13'. L'autre orifice 41' est entouré par une autre nervure 43' à contour fermé, empêchant l'eau de pénétrer dans l'autre orifice 41'.

L'autre nervure 43' est comme la nervure 43.

L'extrémité 15' de l'autre bras 9' est comme l'extrémité 15 du bras 9.

L'invention est particulièrement avantageuse dans la configuration avec deux orifices 41, 41' placés aux deux extrémités transversales opposées de la gouttière 21. Du fait de la grande taille de cette gouttière 21, la tolérance de position des orifices 41, 41' par rapport aux arbres d'entraînement 13, 13' est importante. Il est donc nécessaire de créer des orifices de grandes tailles pour faire passer les arbres d'entrainement 13, 13'.

L'écoulement d'eau à l'intérieur des orifices, en l'absence des nervures 43, 43', serait particulièrement important.

En variante, l'ensemble essuie vitre ne comprend qu'un seul balai et un seul bras.

Il a été décrit ci-dessus que la nervure à contour fermé empêchant l'eau de pénétrer dans l'orifice était le bord dressé de l'orifice. En variante, cette nervure est formée dans la gouttière, c'est-à-dire est venue de matière avec la gouttière, mais n'est pas le bord de l'orifice. Selon une autre variante, la nervure à contour fermé est rapportée sur la gouttière.

Dans l'exemple décrit ci-dessus, le canal transversal et le panneau incliné sont venue de matière l'un avec l'autre. En variante ce sont deux pièces distinctes, fixées l'une à l'autre.

## Revendications

1. Ensemble essuie vitre (5) pour véhicule automobile, l'ensemble comprenant :
- un balai (7) prévu pour essuyer une vitre (3) du véhicule automobile ;
- un bras (9), sur lequel est monté le balai (7) ;
- un entraînement (11) configuré pour entraîner le bras (9) par rapport à la vitre (3) selon un mouvement de pivotement, l'entraînement (11) ayant un arbre (13) d'entraînement du bras (9) sur lequel est fixée une extrémité (15) du bras (9) ;
- une gouttière (19) placée sous la vitre (3) et configurée pour collecter l'eau ruisselant sur la vitre (3) ;
la gouttière (19) ayant un orifice (41) traversé par l'arbre d'entraînement (13), l'orifice (41) étant entouré par une nervure (43) à contour fermé, empêchant l'eau de pénétrer dans l'orifice (41).

2. Ensemble selon la revendication 1, dans lequel la gouttière (19) comprend un canal (21) transversal et un panneau incliné (23) interposé entre le canal (19) et la vitre (3) de telle sorte que l'eau ruisselant sur la vitre (3) traverse le panneau incliné (23) avant d'être recueillie dans le canal (21), l'orifice (41) étant ménagé dans le panneau incliné (23).

3. Ensemble selon la revendication 2, dans lequel le canal transversal (21) et le panneau incliné (23) sont venue de matière, en un matériau plastique.

4. Ensemble selon l'une quelconque des revendications 1 à 3, dans lequel la nervure (43) est formée par un bord dressé de l'orifice (41).

5. Ensemble selon l'une quelconque des revendications 1 à 4, dans lequel la nervure (43) est circulaire, l'extrémité (15) du bras (9) comportant un bord externe cylindrique (53) entourant la nervure (43).

6. Ensemble selon la revendication 5, dans lequel l'extrémité du bras comportant un bord interne cylindrique (55), le bord interne cylindrique (55) et le bord externe cylindrique (53) délimitant entre eux une gorge (57) dans laquelle est placée la nervure (43), la nervure (43) étant engagée sans contact direct ou indirect avec le bord interne cylindrique (55) ou le bord externe cylindrique (53).

7. Ensemble selon l'une quelconque des revendications 1 à 6, dans lequel l'ensemble essuie vitre (5) comprend :
- un autre balai (7') prévu pour essuyer la vitre (3) du véhicule automobile ;
- un autre bras (9'), sur lequel est monté l'autre balai (7') ;
l'entraînement (11) ayant un autre arbre d'entraînement (13') de l'autre bras (9') sur lequel est fixée une extrémité (15') de l'autre bras (9'),
la gouttière (19) ayant un autre orifice (41') traversé par l'autre arbre d'entraînement (13'), l'autre orifice (41') étant entouré par une autre nervure (43') à contour fermé, empêchant l'eau de pénétrer dans l'autre orifice (41').

8. Ensemble selon la revendication 5, dans lequel l'orifice (41) et l'autre orifice (41') sont placés à deux extrémités transversales opposées de la gouttière (19).

9. Véhicule automobile (1), comprenant une vitre (3) et un ensemble essuie vitre (5) selon l'une quelconque des revendications précédentes, prévu pour essuyer ladite vitre (3).

10. Véhicule automobile selon la revendication 9, dans lequel la vitre (3) est un pare-brise du véhicule automobile.
